(19) Europäisches Patentamt
European Patent Office
Office européen des brevets

(11) **EP 4 431 283 A1**

(12) **EUROPEAN PATENT APPLICATION**

(43) Date of publication:
**18.09.2024 Bulletin 2024/38**

(21) Application number: **24162809.8**

(22) Date of filing: **12.03.2024**

(51) International Patent Classification (IPC):
**B33Y 70/10** (2020.01)  **C04B 28/00** (2006.01)

(52) Cooperative Patent Classification (CPC):
(C-Sets available)
**B33Y 70/10; C04B 28/02;** B29C 64/106;
B33Y 10/00; C04B 2111/00181  (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.03.2023 JP 2023040228**

(71) Applicant: SHIN-ETSU CHEMICAL CO., LTD.
**Tokyo (JP)**

(72) Inventor: **KONISHI, Hidekazu**
**Joetsu-shi (JP)**

(74) Representative: **Mewburn Ellis LLP**
**Aurora Building**
**Counterslip**
**Bristol BS1 6BX (GB)**

(54) **HYDRAULIC COMPOSITION FOR 3D PRINTING AND METHOD OF MANUFACTURING 3D OBJECT**

(57)     A hydraulic composition comprising (A) a water-soluble hydroxyalkyl alkyl cellulose, (B) a polyacrylamide, (C) cement, (D) water, and (E) short fibers is suitable for 3D printing of the material extrusion process. The composition has satisfactory nozzle extrudability, self-support after lamination, and water retention. A method of manufacturing a three-dimensional object using the hydraulic composition is also provided.

**EP 4 431 283 A1**

(52) Cooperative Patent Classification (CPC): (Cont.)

C-Sets
**C04B 28/02, C04B 14/28, C04B 14/042,
C04B 14/48, C04B 14/386, C04B 14/4668,
C04B 16/0625, C04B 16/0633, C04B 18/08,
C04B 18/141, C04B 18/146, C04B 24/32,
C04B 24/38, C04B 24/383, C04B 24/2623,
C04B 24/2652, C04B 2103/302**

**Description**

TECHNICAL FIELD

This invention relates to a hydraulic composition suited for layer modeling by 3D printing and a method of manufacturing 3D objects.

BACKGROUND

The 3D printing is an additive manufacturing technology of depositing layers in conformity with a cross-sectional shape on the basis of 3D data until a 3D object is completed. The 3D printing is generally divided into four categories. Known are a binder jetting process (jetting a liquid binder onto a powder bed and selectively solidifying), a directed energy deposition process (controlling a heat generation position and selectively melting and bonding a material), a material jetting process (jetting droplets of a material and selectively depositing and solidifying), and a material extrusion process (extruding a flowing material through a nozzle and solidifying).

When a cement based material is used in 3D printing, the material extrusion process is adequate among others. The material used in this process must meet extrudability through the nozzle and self-support after lamination (free-standing laminate and minimal deformation of a lower layer section of a multilayer structure). Since these properties are contradictory, it is difficult for the material to meet both the properties.

For solving the problem, Patent Document 1 (JP-A 2020-105023) specifies the relationship of the contents of a cellulose based thickener and fumed silica, thereby meeting both extrudability and self-support after lamination.

Citation List

Patent Document 1: JP-A 2020-105023

SUMMARY OF INVENTION

In Patent Document 1, the viscosity of a 1 wt% aqueous solution of cellulose based thickener is specified at every shear rate. However, a hydraulic composition containing fumed silica is highly thixotropic, which fails to take advantage of the properties of the cellulose based thickener. Then some of the desired effects are not obtained, for example, discharge throttling.

An object of the invention is to provide a hydraulic composition suitable for 3D printing of the material extrusion process, meeting extrudability through the nozzle, self-support after lamination (free-standing laminate and minimal deformation of a lower layer section of a multilayer structure), and water retention, and a method of manufacturing a three-dimensional object using the hydraulic composition.

The inventors have found that a hydraulic composition comprising a water-soluble hydroxyalkyl alkyl cellulose providing a specific aqueous solution viscosity, a polyacrylamide having a specific anionization degree and providing a specific aqueous solution viscosity, cement, water, and short fibers has advantages including nozzle extrudability, minimal deformation of a lower layer section of a laminate, and water retention and is thus suitable for 3D printing.

In one aspect, the invention provides a hydraulic composition for 3D printing, comprising at least (A) a water-soluble hydroxyalkyl alkyl cellulose, (B) a polyacrylamide, (C) cement, (D) water, and (E) short fibers. A 2 wt% aqueous solution of the water-soluble hydroxyalkyl alkyl cellulose (A) has a viscosity of 2,000 to 6,000 mPa s at 20°C. The polyacrylamide (B) has an anionization degree of 6 to 40 mol%, and a 0.5 wt% aqueous solution of the polyacrylamide (B) in a 4 wt% aqueous solution of sodium chloride has a viscosity of 10 to 300 mPa·s at 25°C.

In a preferred embodiment, the water-soluble hydroxyalkyl alkyl cellulose (A) and the polyacrylamide (B) are present in a weight ratio (A)/(B) of 80/20 to 99.9/0.1.

In a preferred embodiment, the water-soluble hydroxyalkyl alkyl cellulose (A) is present in an amount of 0.1 to 0.6 part by weight per 100 parts by weight of the cement (C).

In a preferred embodiment, the short fibers (E) are present in an amount of 0.1 to 3 parts by volume per 100 parts by volume of the hydraulic composition. The short fibers (E) are selected from the group consisting of polypropylene, polyethylene, vinylon, acrylic, aramid, glass, basalt, steel, and carbon fibers and mixtures thereof.

The hydraulic composition may further comprise a fine aggregate.

In another aspect, the invention provides a method of manufacturing a three-dimensional object comprising the steps of pumping the hydraulic composition defined herein to a nozzle, and depositing the hydraulic composition layer by layer while traversing the nozzle.

ADVANTAGEOUS EFFECTS

The hydraulic composition of the invention has advantages including nozzle extrudability, self-support after lamination (free-standing laminate, minimal deformation of a lower layer section of a laminate), and water retention. It is a cement-based material suitable for 3D printing by the material extrusion process.

FURTHER EXPLANATIONS; OPTIONS AND PREFERENCES

One embodiment of the invention is a hydraulic composition for 3D printing, comprising at least (A) a water-soluble hydroxyalkyl alkyl cellulose, (B) a polyacrylamide, (C) cement, (D) water, and (E) short fibers. A 2 wt% aqueous solution of the water-soluble hydroxyalkyl alkyl cellulose (A) has a viscosity of 2,000 to 6,000 mPa s at 20°C. The polyacrylamide (B) has an anionization degree of 6 to 40 mol%. A 0.5 wt% aqueous solution of the polyacrylamide (B) in a 4 wt% aqueous solution of sodium chloride has a viscosity of 10 to 300 mPa·s at 25°C.

As used herein, the term "composition comprising at least components (A) to (E)" refers to a composition containing (A) to (E) as essential components. Namely, the hydraulic composition for 3D printing is a composition containing (A) a water-soluble hydroxyalkyl alkyl cellulose, (B) a polyacrylamide, (C) cement, (D) water, and (E) short fibers as essential components.

Component (A)

Component (A) is a water-soluble hydroxyalkyl alkyl cellulose, which is preferably hydroxypropyl methyl cellulose (HPMC) and/or hydroxyethyl methyl cellulose (HEMC).

A 2 wt% aqueous solution of the water-soluble hydroxyalkyl alkyl cellulose should have a viscosity at 20°C of 2,000 to 6,000 mPa s, preferably 2,500 to 5,500 mPa s, more preferably 2,500 to 5,300 mPa·s, even more preferably 2,500 to 5,000 mPa·s. By using said 2 wt% aqueous solution, preferable both nozzle extrudability and self-support after lamination may be ensured. The viscosity at 20°C of a 2 wt% aqueous solution of the water-soluble hydroxyalkyl alkyl cellulose may be measured by a Brookfield viscometer.

The degree of substitution (DS) of alkoxy groups of the water-soluble hydroxyalkyl alkyl cellulose is not particularly limited. It is preferably from 1.0 to 2.0, more preferably from 1.2 to 1.95, even more preferably from 1.3 to 1.92. By using said degree of substitution (DS), preferable both nozzle extrudability and self-support after lamination may be ensured.

The molar substitution (MS) of hydroxyalkoxy groups of the water-soluble hydroxyalkyl alkyl cellulose is not particularly limited. It is preferably from 0.05 to 0.6, more preferably from 0.1 to 0.5, even more preferably from 0.1 to 0.4. By using said molar substitution (MS), preferable solubility in summer season may be ensured.

The DS (degree of substitution) of alkoxy groups for the water-soluble hydroxyalkyl alkyl cellulose is the average number of alkoxy groups attached to the anhydroglucose unit of cellulose. The MS (molar substitution) of hydroxyalkoxy groups for the water-soluble hydroxyalkyl alkyl cellulose is the average number of moles of hydroxyalkoxy groups per mole of anhydroglucose unit of cellulose. The DS of alkoxy and the MS of hydroxyalkoxy of the water-soluble hydroxyalkyl alkyl cellulose may be determined from conversion of the values measured by the analysis of DS of hypromellose (hydroxypropyl methyl cellulose) prescribed in the Japanese Pharmacopoeia, 18th Edition.

For the water-soluble hydroxyalkyl alkyl cellulose, a suitable combination of the viscosity at 20°C of a 2 wt% aqueous solution, the DS of alkoxy, and the MS of hydroxyalkoxy is:

> where component (A) is hydroxypropyl methyl cellulose, preferably 2 wt% aqueous solution viscosity at 20°C: 2,000 to 6,000 mPa·s, methoxy DS: 1.0 to 2.0, and hydroxypropoxy MS: 0.05 to 0.6; more preferably 2 wt% aqueous solution viscosity at 20°C: 2,500 to 5,500 mPa s, methoxy DS: 1.2 to 1.95, and hydroxypropoxy MS: 0.1 to 0.5; even more preferably 2 wt% aqueous solution viscosity at 20°C: 2,500 to 5,000 mPa s, methoxy DS: 1.3 to 1.92, and hydroxypropoxy MS: 0.1 to 0.4; and

> where component (A) is hydroxyethyl methyl cellulose, preferably 2 wt% aqueous solution viscosity at 20°C: 2,000 to 6,000 mPa s, methoxy DS: 1.0 to 2.0, and hydroxyethoxy MS: 0.05 to 0.6; more preferably 2 wt% aqueous solution viscosity at 20°C: 2,500 to 5,500 mPa s, methoxy DS: 1.2 to 1.95, and hydroxyethoxy MS: 0.1 to 0.5; even more preferably 2 wt% aqueous solution viscosity at 20°C: 2,500 to 5,000 mPa s, methoxy DS: 1.3 to 1.92, and hydroxyethoxy MS: 0.1 to 0.4.

The amount of the water-soluble hydroxyalkyl alkyl cellulose (A) added is not particularly limited. It is preferably from 0.1 to 0.6 part by weight, more preferably from 0.15 to 0.57 part by weight, even more preferably from 0.2 to 0.55 part by weight per 100 parts by weight of the cement (C). By adding said amount of the water-soluble hydroxyalkyl alkyl cellulose (A), preferable imparting water retention to the hydraulic composition may be ensured.

Component (B)

Component (B) is a polyacrylamide. The polyacrylamide has an anionization degree of 6 to 40 mol%, preferably 7 to 40 mol%, more preferably 8 to 40 mol%, even more preferably 8 to 39 mol%. By using said anionization degree, preferable both nozzle extrudability and self-support after lamination may be ensured. As used herein, the "anionization degree" refers to a molar percent anion modification of the amide group of polyacrylamide which can be measured by the colloidal titration method.

A 0.5 wt% aqueous solution of the polyacrylamide in a 4 wt% aqueous solution of sodium chloride (that is, an aqueous solution obtained by dissolving the polyacrylamide in a 4 wt% aqueous solution of sodium chloride to a concentration of 0.5 wt%) has a viscosity at 25°C of from 10 to 300 mPa·s, preferably from 15 to 290 mPa·s, more preferably from 20 to 280 mPa s, even more preferably 25 to 270 mPa s. By using said viscosity at 25°C, preferable both nozzle extrudability and self-support after lamination may be ensured. The viscosity at 25°C of a 0.5 wt% aqueous solution of the polyacrylamide may be measured by a Brookfield viscometer.

For the polyacrylamide, a suitable combination of the anionization degree and the viscosity at 25°C of a 0.5 wt% aqueous solution is anionization degree: 6 to 40 mol% and aqueous solution viscosity: 10 to 300 mPa·s; preferably anionization degree: 7 to 40 mol% and aqueous solution viscosity: 15 to 290 mPa·s; more preferably anionization degree: 8 to 40 mol% and aqueous solution viscosity: 20 to 280 mPa·s; even more preferably anionization degree: 8 to 39 mol% and aqueous solution viscosity: 25 to 270 mPa·s.

The amount of the polyacrylamide (B) added is not particularly limited. It is preferably from 0.001 to 0.12 part by weight, more preferably from 0.003 to 0.1 part by weight, even more preferably from 0.005 to 0.08 part by weight per 100 parts by weight of the cement (C). By adding said amount of the polyacrylamide (B), preferable both nozzle extrudability and self-support after lamination may be ensured.

The weight ratio (A)/(B) of the water-soluble hydroxyalkyl alkyl cellulose (A) and the polyacrylamide (B) in the hydraulic composition is not particularly limited. It is preferably from 80/20 to 99.9/0.1, more preferably from 83/17 to 99.5/0.5, even more preferably from 85/15 to 99/1. By using said weight ratio (A)/(B), preferable both nozzle extrudability and self-support after lamination may be ensured.

Component (C)

Examples of the cement (C) include various types of cement such as ordinary Portland cement, high-early-strength Portland cement, moderate-heat Portland cement, blast-furnace slag cement, silica cement, fly-ash cement, alumina cement, and ultra-high-early-strength Portland cement.

Component (D)

Tap water and seawater may be used as the water (D), with tap water being preferred in consideration of salt attack.

The amount of water added is preferably 25 to 70 parts by weight, more preferably 28 to 67 parts by weight, even more preferably 30 to 65 parts by weight per 100 parts by weight of the cement.

The amount of water used is not particularly limited. It is preferably from 15 to 70% by weight, more preferably from 16 to 65% by weight, even more preferably from 17 to 60% by weight based on the weight of the cement or when a fine aggregate is added, the total weight of the cement and the fine aggregate. By using said amount of water, preferable both nozzle extrudability and self-support after lamination may be ensured.

Component (E)

Component (E) is short fibers, which may be organic or inorganic. Suitable organic fibers include polypropylene, polyethylene, vinylon, acrylic and aramide fibers. Suitable inorganic fibers include glass, basalt, steel, and carbon fibers.

The short fibers are preferably selected from the group consisting of polypropylene, polyethylene, vinylon, acrylic, aramide, glass, basalt, steel, carbon fibers, and mixtures thereof. Inter alia, polypropylene, polyethylene, and vinylon fibers are preferred. Any of commercially available short fibers used in fiber-reinforced concrete may also be used.

The average fiber length of the short fibers (E) is not particularly limited. It is preferably from 1 to 20 mm, more preferably from 3 to 18 mm, even more preferably from 5 to 15 mm. By using said average fiber length, preferable reinforcement and nozzle extrudability may be ensured.

The short fibers preferably have a fineness or linear mass density of 0.1 to 1,000 decitex (dtex), more preferably 1 to 100 dtex. The short fibers are preferably of linear shape.

The amount of the short fibers (E) added is not particularly limited. It is preferably from 0.1 to 3 parts by volume, more preferably from 0.13 to 2 parts by volume, even more preferably from 0.15 to 1.5 parts by volume per 100 parts by volume of the hydraulic composition. By adding said amount of the short fibers (E), preferable reinforcement and nozzle extrudability may be ensured. The amount (parts by volume) of short fibers is calculated by dividing the weight by the density.

Other components

In the hydraulic composition, a defoamer may be used for controlling the amount of bubbles carried over by the water-soluble hydroxyalkyl alkyl cellulose. Examples of the defoamer include oxyalkylene, silicone, alcohol, mineral oil, fatty acid, and fatty acid ester based agents.

Exemplary oxyalkylene based defoamers include polyoxyalkylenes such as (poly)oxyethylene (poly)oxypropylene adducts; (poly)oxyalkylene alkyl ethers such as diethylene glycol heptyl ether, polyoxyethylene oleyl ether, polyoxypropylene butyl ether, polyoxyethylene polyoxypropylene 2-ethylhexyl ether, and oxyethylene oxypropylene adducts of higher alcohols of 8 or more carbon atoms or secondary alcohols of 12 to 14 carbon atoms; (poly)oxyalkylene (alkyl) aryl ethers such as polyoxypropylene phenyl ether and polyoxyethylene nonyl phenyl ether; acetylene ethers obtained from addition polymerization of alkylene oxide to acetylene alcohol such as 2,4,7,9-tetramethyl-5-decyne-4,7-diol, 2,5-dimethyl-3-hexyne-2,5-diol, and 3-methyl-1-butyn-3-ol; (poly)oxyalkylene fatty acid esters such as diethylene glycol oleic acid ester, diethylene glycol lauric acid ester, and ethylene glycol distearic acid ester; (poly)oxyalkylene sorbitan fatty acid esters such as polyoxyethylene sorbitan monolauric acid ester and polyoxyethylene sorbitan trioleic acid ester; (poly)oxylalkylene alkyl (aryl) ether sulfuric acid ester salts such as polyoxypropylene methyl ether sodium sulfate and polyoxyethylene dodecyl phenol ether sodium sulfate; (poly)oxyalkylene alkyl phosphoric acid esters such as (poly)oxyethylene stearyl phosphoric acid ester; (poly)oxyalkylene alkyl amines such as polyoxyethylene lauryl amine; and polyoxyalkylene amides.

Exemplary silicone based defoamers include dimethylsilicone oils, silicone pastes, silicone emulsions, organo-modified polysiloxanes (polyorganosiloxanes such as dimethylpolysiloxane), and fluorosilicone oils.

Exemplary alcohol based defoamers include octyl alcohol, 2-ethylhexyl alcohol, hexadecyl alcohol, acetylene alcohol, and glycols.

Exemplary mineral oil based defoamers include kerosene and liquid paraffins.

Exemplary fatty acid based defoamers include oleic acid, stearic acid, and alkylene oxide adducts thereof.

Exemplary fatty acid ester based defoamers include glycerin monoricinoleate, alkenyl succinic acid derivatives, sorbitol monolaurate, sorbitol trioleate, and natural wax.

Inter alia, oxyalkylene based defoamers are preferred in view of defoaming ability.

The amount of the defoamer added is not particularly limited. It is preferably from 1 to 30 parts by weight, more preferably from 3 to 29 parts by weight, even more preferably from 5 to 28 parts by weight per 100 parts by weight of the water-soluble hydroxyalkyl alkyl cellulose (A), or preferably from 1 to 38% by weight, more preferably from 3 to 36% by weight, even more preferably from 5 to 35% by weight based on the total weight of the water-soluble hydroxyalkyl alkyl cellulose (A) and the polyacrylamide (B). By adding said amount of the defoamer, preventing the bubbles entrained during preparation of the hydraulic composition from degrading the self-support after lamination and preferable strength of the hydraulic composition may be ensured.

To the hydraulic composition, a fine aggregate may be added. Examples of the fine aggregate include river sand, pit sand, sea sand, land sand, and silica sand as used in the preparation of fresh concrete and as plastering fine aggregate. The particle size of the fine aggregate is preferably 0.075 to 5 mm, more preferably 0.075 to 2 mm, even more preferably 0.075 to 1 mm.

The amount of the fine aggregate added is preferably 15 to 85 parts by weight, more preferably 20 to 80 parts by weight, even more preferably 25 to 75 parts by weight per 100 parts by weight of the cement and fine aggregate combined.

Part of the fine aggregate may be replaced by an inorganic or organic extender. Suitable inorganic extenders include fly ash, blast furnace slag, talc, calcium carbonate, fumed silica, powdered marble or powdered lime, pearlite, and Shirasu balloons. Suitable organic extenders include ground forms of expanded styrene beads and expanded ethylene vinyl alcohol. The inorganic or organic extender having a particle size of up to 5 mm is commonly used and preferred herein.

For the purpose of further improving nozzle extrudability and self-support after lamination, a water-soluble polymer other than the above-mentioned ones may be added. Suitable water-soluble polymers include synthetic polymers such as polyethylene glycol and polyvinyl alcohol, and naturally occurring high-molecular-weight substances such as pectin, gelatin, casein, diutan gum, Wellan gum, xanthan gum, gellan gum, locust bean gum, and guar gum. The amount of the water-soluble polymer added is preferably 0.01 to 1.0 part by weight, more preferably 0.05 to 0.8 part by weight, even more preferably 0.1 to 0.6 part by weight per 100 parts by weight of the cement.

To the hydraulic composition, any of well-known water-reducing agents, set retarders, set accelerators, expanding agents, and shrinkage reducing agents may be added, if necessary, as long as the benefits of the invention are not impaired.

Suitable water-reducing agents include polycarboxylic acid agents such as polycarboxylic acid ether, complexes of polycarboxylic acid ether with crosslinked polymers, complexes of polycarboxylic acid ether with oriented polymers, complexes of polycarboxylic acid ether with highly modified polymers, polyether carboxylic acid polymers, maleic acid copolymers, maleate copolymers, maleic acid derivative copolymers, carboxy-containing polyethers, polycarboxylic acid group-containing multiple polymers having a terminal sulfone group, polycarboxylic acid-based graft copolymers, polycarboxylic acid compounds, and polycarboxylic acid ether based polymers; melamine based agents such as melamine sulfonic acid formalin condensates, melamine sulfonic acid salt condensates, melamine sulfonic acid salt polyol condensates; and lignin based agents such as lignin sulfonic acid salts and derivatives thereof. In view of water-reducing effect, fluidity and flow maintenance, polycarboxylic acid based water reducing agents are preferred. The amount of the water-reducing agent added is preferably 0.1 to 5 parts by weight per 100 parts by weight of the cement (C).

Suitable set retarders include oxycarboxylic acids such as gluconic acid, citric acid, and glucoheptonic acid, and inorganic salts thereof with sodium, potassium, calcium, magnesium and ammonium, saccharides such as glucose, fructose, galactose, saccharose, xylose, arabinose, ribose, oligosaccharide and dextran; and boric acid. The amount of the set retarder added is preferably 0.005 to 10 parts by weight per 100 parts by weight of the cement (C).

The set accelerators are generally divided into inorganic compounds and organic compounds. Suitable inorganic compounds include chlorides such as calcium chloride and potassium chloride, nitrites such as sodium nitrite and calcium nitrite, nitrates such as sodium nitrate and calcium nitrate, sulfates such as calcium sulfate, sodium sulfate and alum, thiocyanates such as sodium thiocyanate, hydroxides such as sodium hydroxide and potassium hydroxide, carbonates such as calcium carbonate, sodium carbonate and lithium carbonate, sodium silicate, aluminum hydroxide, and alumina species such as aluminum oxide. Suitable organic compounds include amines such as diethanolamine and triethanolamine, calcium salts of organic acids such as calcium formate and calcium acetate, and maleic anhydride. The amount of the set accelerator added is preferably 0.005 to 10 parts by weight per 100 parts by weight of the cement (C).

Suitable expanding agents include ettringite based expanding agents, lime based expanding agents, and ettringite-lime composite expanding agents. The amount of the expanding agent added is preferably 0.5 to 30 parts by weight, more preferably 1 to 30 parts by weight, even more preferably 3 to 25 parts by weight per 100 parts by weight of the cement (C).

Suitable shrinkage reducing agents include lower and higher alcohol alkylene oxide adducts, glycol ether derivatives, and polyether derivatives. The amount of the shrinkage reducing agent added is preferably 0.1 to 0.5 part by weight, more preferably 0.15 to 0.45 part by weight, even more preferably 0.2 to 0.4 part by weight per 100 parts by weight of the cement (C).

The hydraulic composition is typically prepared by admitting all components including the water-soluble hydroxyalkyl alkyl cellulose (A), the polyacrylamide (B), the cement (C), water (D), the short fibers (E) and optionally, fine aggregate all at once, and mixing them. Alternatively, the hydraulic composition is prepared by previously mixing the cement (C) with the water-soluble hydroxyalkyl alkyl cellulose (A), the polyacrylamide (B), and the short fibers (E), admitting the mixture or the mixer and fine aggregate into a mixer, admitting water (D), and mixing them. For mixing, a mixer complying with JIS R 5201 such as a commercial mortar mixer may be used.

The hydraulic composition defined above exhibits satisfactory extrudability through the nozzle, self-support after lamination (free-standing laminate and minimal deformation of a lower layer section of a multilayer structure), and water retention. It is thus suitable for additive manufacturing, especially 3D printing of the material extrusion process,

Another embodiment of the invention is a method of manufacturing a three-dimensional object comprising the steps of pumping the hydraulic composition to a nozzle, and depositing the hydraulic composition layer by layer while traversing the nozzle.

The method of manufacturing a three-dimensional object is preferably carried out by a 3D printer system comprising a tank for storing the hydraulic composition, a conduit connected to the tank for flowing the composition, a pump for pumping the composition from the tank through the conduit, a nozzle connected to the conduit for discharging the composition, a movement for traversing the nozzle, and means for controlling the pump and the movement. There may also be used an integral hopper-pump unit in which the tank for storing the hydraulic composition is integrated with the pump for pumping the composition.

EXAMPLES

Examples and Comparative Examples are shown below for illustrating the invention although the invention is not limited thereto. The viscosity of a 2 wt% aqueous solution of a water-soluble hydroxyalkyl alkyl cellulose, referred to as "2% solution viscosity," is measured at 20°C by a Brookfield rotational viscometer. The anionization degree of a polyacrylamide is measured by the colloidal titration method. The viscosity of a 0.5 wt% aqueous solution of a polyacrylamide in a 4 wt% aqueous solution of sodium chloride, referred to as "0.5% solution viscosity," is measured at 25°C by a Brookfield rotational viscometer.

Examples 1 to 15 and Comparative Examples 1 to 6

<Materials used>

(1) Cement (C): ordinary Portland cement (Taiheiyo Cement Corp.)

(2) Silica sand (S): Mikawa silica sand #56 (particle size 75-425 $\mu$m, Mikawa Keiseki Co., Ltd.)

(3) Water: tap water

(4) Water-soluble hydroxyalkyl alkyl cellulose (CE): sample specification shown in Table 1

(5) Polyacrylamide (PA): sample specification shown in Table 2

(6) Short fibers: polypropylene fibers, average fiber length 6 mm, density 0.91 g/cm$^3$, fineness 13 dtex (BarChip Inc.)

(7) Defoamer: SN defoamer 14HP (San Nopco Ltd.)

Table 1

| Sample No. | Type | Degree of substitution (DS) | Molar substitution (MS) | 2% solution viscosity (mPa·s) |
|---|---|---|---|---|
| CE-1 | HPMC | 1.82 | 0.16 | 3750 |
| CE-2 | HPMC | 1.92 | 0.24 | 4890 |
| CE-3 | HEMC | 1.49 | 0.18 | 2650 |
| CE-4 | HPMC | 1.79 | 0.20 | 1160 |
| CE-5 | HEMC | 1.51 | 0.19 | 7690 |
| HPMC: hydroxypropyl methyl cellulose HEMC: hydroxyethyl methyl cellulose | | | | |

Table 2

| Sample No. | Anionization degree (mol%) | 0.5% solution viscosity (mPa·s) |
|---|---|---|
| PA-1 | 33 | 155 |
| PA-2 | 25 | 153 |
| PA-3 | 18 | 147 |
| PA-4 | 9 | 151 |
| PA-5 | 38 | 145 |
| PA-6 | 21 | 26 |
| PA-7 | 23 | 65 |
| PA-8 | 21 | 265 |
| PA-9 | 5 | 160 |
| PA-10 | 45 | 169 |
| PA-11 | 26 | 8 |

(continued)

| Sample No. | Anionization degree (mol%) | 0.5% solution viscosity (mPa·s) |
|---|---|---|
| PA-12 | 25 | 321 |

<Preparation of hydraulic composition>

A hydraulic composition was prepared using a mortar mixer according to JIS R 5201. The materials and amounts are shown in Table 3. First, CE, PA, short fibers and defoamer were premixed with cement. The cement and silica sand were admitted into the mortar mixer and mixed for 60 seconds by low speed agitation (rotary motion 140 rpm, planetary motion 60 rpm). Then water was added to the mixture, whereupon mixing was continued for 180 seconds by low speed agitation (rotary motion 140 rpm, planetary motion 60 rpm). The material temperature was adjusted so that the finished composition was at a temperature of 20±3°C.

Table 3

| Cement (g) | Silica sand (g) | Water | CE | PA | Short fibers (g) | Defoamer |
|---|---|---|---|---|---|---|
| 1,500 | 1,500 | described in Table 4 | described in Table 4 | described in Table 4 | 6 | (CE+PA) × 10 wt% |

<Evaluation>

(1) Extrudability

The hydraulic composition was discharged through a nozzle under the pumping conditions shown below. A sample was rated "Good" for uniform discharge, and "Poor" when undischarged because of clogging in the hose or nozzle.

[Pumping conditions]

Mohno pump model 2NVL15 (Heishin Ltd.) which is an integral hopper-pump unit was used. The outlet port of the pump was connected to a hose (inner diameter 38 mm, length 0.5 m). A nozzle having an opening (height 15 mm, width 30 mm) was connected to the distal end of the hose. A mechanism for discharging the hydraulic composition in parallelepiped shape was constructed in this way. The nozzle was secured with its opening directed horizontal. The hydraulic composition was discharged or extruded at a discharge rate of 0.5 L/min. The thus shaped parallelepiped object of the hydraulic composition was carried over by a belt conveyor at a speed synchronous with the discharge rate. The pump was operated at a frequency of 6 Hz.

(2) Self-support after lamination

Under the above pumping conditions, two objects of length 500 mm, a single-layer object (as extrusion molded) and a three-layer object (single-layer objects as extrusion molded are stacked to a three-layer laminate) were manufactured. For each of the single-layer and three-layer objects after 24 hours from the manufacture, the transverse width of the first layer was measured at longitudinally 150 mm, 250 mm and 350 mm apart positions by a caliper. An average of widths at three positions was calculated, from which a percent deformation was computed according to the following formula (1). A sample with a deformation of 6% or less was judged excellent in self-support after lamination.

$$\text{Deformation (\%)} =$$

$$[(\text{width of 1st layer of 3-layer object}) - (\text{width of 1-layer object})] /$$

$$(\text{width of 1-layer object}) \times 100 \quad (1)$$

(3) Water retention

A water retention test was carried out according to the tile-bonding mortar testing method (A.2.3) of JIS A 6916, Attachment A. A water retention of 75% or higher was regarded sufficient to inhibit water separation.

# EP 4 431 283 A1

The test results are shown in Table 4.

## Table 4

| | | (A) CE | | (B) PA | | CE/PA | (D) Water | (E) Short fibers | Extrudability | (Free-standing laminate) Deformation (%) | Water retention (%) |
|---|---|---|---|---|---|---|---|---|---|---|---|
| | | Type | Addition amount*1 | Type | Addition amount*1 | weight ratio | Addition amount*1 | Addition amount*2 | | | |
| Example | 1 | CE-1 | 0.38 | PA-1 | 0.02 | 95/5 | 41.0 | 0.37 | Good | 2.6 | 83.6 |
| | 2 | CE-2 | 0.38 | PA-1 | 0.02 | 95/5 | 41.0 | 0.37 | Good | 3.5 | 84.7 |
| | 3 | CE-3 | 0.38 | PA-1 | 0.02 | 95/5 | 41.0 | 0.37 | Good | 2.9 | 82.1 |
| | 4 | CE-1 | 0.38 | PA-2 | 0.02 | 95/5 | 41.0 | 0.37 | Good | 2.9 | 83.4 |
| | 5 | CE-1 | 0.38 | PA-3 | 0.02 | 95/5 | 41.0 | 0.37 | Good | 3.8 | 82.9 |
| | 6 | CE-1 | 0.38 | PA-4 | 0.02 | 95/5 | 41.0 | 0.37 | Good | 4.7 | 82.1 |
| | 7 | CE-1 | 0.38 | PA-5 | 0.02 | 95/5 | 41.0 | 0.37 | Good | 1.5 | 85.5 |
| | 8 | CE-1 | 0.38 | PA-6 | 0.02 | 95/5 | 41.0 | 0.37 | Good | 5.3 | 82.0 |
| | 9 | CE-1 | 0.38 | PA-7 | 0.02 | 95/5 | 41.0 | 0.37 | Good | 4.1 | 83.1 |
| | 10 | CE-1 | 0.38 | PA-8 | 0.02 | 95/5 | 41.0 | 0.37 | Good | 1.9 | 85.1 |
| | 11 | CE-1 | 0.285 | PA-1 | 0.015 | 95/5 | 40.0 | 0.37 | Good | 3.5 | 77.6 |
| | 12 | CE-1 | 0.475 | PA-1 | 0.025 | 95/5 | 42.0 | 0.36 | Good | 2.0 | 86.4 |
| | 13 | CE-1 | 0.388 | PA-1 | 0.012 | 97/3 | 41.0 | 0.37 | Good | 3.2 | 85.1 |
| | 14 | CE-1 | 0.36 | PA-1 | 0.04 | 90/10 | 44.0 | 0.36 | Good | 2.5 | 82.1 |
| | 15 | CE-1 | 0.34 | PA-1 | 0.06 | 85/15 | 45.0 | 0.35 | Good | 2.0 | 80.1 |
| Comparative Example | 1 | CE-4 | 0.38 | PA-1 | 0.02 | 95/5 | 41.0 | 0.37 | Poor | - | 68.5 |
| | 2 | CE-5 | 0.38 | PA-1 | 0.02 | 95/5 | 41.0 | 0.37 | Good | 9.1 | 86.7 |
| | 3 | CE-1 | 0.38 | PA-9 | 0.02 | 95/5 | 41.0 | 0.37 | Good | 12.6 | 81.7 |
| | 4 | CE-1 | 0.38 | PA-10 | 0.02 | 95/5 | 41.0 | 0.37 | Poor | - | 84.1 |
| | 5 | CE-1 | 0.38 | PA-11 | 0.02 | 95/5 | 41.0 | 0.37 | Good | 10.5 | 81.9 |
| | 6 | CE-1 | 0.38 | PA-12 | 0.02 | 95/5 | 41.0 | 0.37 | Poor | - | 83.5 |

*1　part by weight per 100 parts by weight of cement

*2　part by volume per 100 parts by volume of hydraulic composition

As seen from the above results, Examples 1 to 15 using CE having a 2% solution viscosity at 20°C of 2,000 to 6,000 mPa·s and PA having an anionization degree of 6 to 40 mol% and a 0.5% solution viscosity at 25°C of 10 to 300 mPa·s show excellent pumping extrudability and meet the standards of self-support after lamination (deformation of a lower layer section of a laminate) and water retention.

Comparative Example 1 using CE having a 2% solution viscosity of less than 2,000 mPa·s encountered clogging of the hose due to the shortage of lubricity of mortar and failed to meet the standard of water retention. Comparative Example 2 using CE having a 2% solution viscosity in excess of 6,000 mPa·s experienced considerable deformation by its own weight due to excessively viscous mortar and failed to meet the standard of self-support after lamination (deformation of a lower layer section of a laminate).

Comparative Example 3 using PA having an anionization degree of less than 6 mol% and Comparative Example 5 using PA having a 0.5% solution viscosity of less than 10 mPa·s show a considerable deformation of a lower layer section due to a poor coagulating effect. Comparative Example 4 using PA having an anionization degree in excess of 40 mol% and Comparative Example 6 using PA having a 0.5% solution viscosity in excess of 300 mPa·s encountered clogging of the hose due to an intense coagulating effect of PA.

**Claims**

1. A hydraulic composition for 3D printing, comprising at least (A) a water-soluble hydroxyalkyl alkyl cellulose, (B) a polyacrylamide, (C) cement, (D) water, and (E) short fibers, wherein

   a 2 wt% aqueous solution of the water-soluble hydroxyalkyl alkyl cellulose (A) has a viscosity of 2,000 to 6,000 mPa·s at 20°C,
   the polyacrylamide (B) has an anionization degree of 6 to 40 mol%, and a 0.5 wt% aqueous solution of the polyacrylamide (B) in a 4 wt% aqueous solution of sodium chloride has a viscosity of 10 to 300 mPa·s at 25°C.

2. The hydraulic composition of claim 1 wherein the water-soluble hydroxyalkyl alkyl cellulose (A) and the polyacrylamide (B) are present in a weight ratio (A)/(B) of 80/20 to 99.9/0.1.

3. The hydraulic composition of claim 1 or 2 wherein the water-soluble hydroxyalkyl alkyl cellulose (A) is present in an amount of 0.1 to 0.6 part by weight per 100 parts by weight of the cement (C).

4. The hydraulic composition of any one of claims 1 to 3 wherein the short fibers (E) are present in an amount of 0.1 to 3 parts by volume per 100 parts by volume of the hydraulic composition.

5. The hydraulic composition of any one of claims 1 to 4 wherein the short fibers (E) are selected from the group consisting of polypropylene, polyethylene, vinylon, acrylic, aramid, glass, basalt, steel, and carbon fibers and mixtures thereof.

6. The hydraulic composition of any one of claims 1 to 5, further comprising a fine aggregate.

7. A method of manufacturing a three-dimensional object comprising the steps of pumping the hydraulic composition of any one of claims 1 to 6 to a nozzle, and depositing the hydraulic composition layer by layer while traversing the nozzle.

Europäisches
Patentamt

European
Patent Office

Office européen
des brevets

# EUROPEAN SEARCH REPORT

Application Number

EP 24 16 2809

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 2 588 427 B1 (DOW GLOBAL TECHNOLOGIES LLC [US]) 24 July 2019 (2019-07-24) * examples * | 1-7 | INV. B33Y70/10 C04B28/00 |
| A | CN 114 890 758 A (SICHUAN HUANENG LUDING HYDROPOWER CO LTD; INST ROCK & SOIL MECH CAS) 12 August 2022 (2022-08-12) * paragraph [0047]; tables 1, 2 * | 1-7 | |

TECHNICAL FIELDS SEARCHED (IPC)

B33Y
B29C
C04B

The present search report has been drawn up for all claims

| Place of search | Date of completion of the search | Examiner |
|---|---|---|
| The Hague | 17 July 2024 | Martins Lopes, Luis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 2809

This annex lists the patent family members relating to the patent documents cited in the above-mentioned European search report.
The members are as contained in the European Patent Office EDP file on
The European Patent Office is in no way liable for these particulars which are merely given for the purpose of information.

17-07-2024

| Patent document cited in search report | | Publication date | Patent family member(s) | | Publication date |
|---|---|---|---|---|---|
| EP 2588427 | B1 | 24-07-2019 | BR | 112012031993 A2 | 08-11-2016 |
| | | | CN | 102971273 A | 13-03-2013 |
| | | | EP | 2588427 A1 | 08-05-2013 |
| | | | JP | 5837591 B2 | 24-12-2015 |
| | | | JP | 2013529592 A | 22-07-2013 |
| | | | KR | 20130086344 A | 01-08-2013 |
| | | | US | 2013092056 A1 | 18-04-2013 |
| | | | WO | 2012005960 A1 | 12-01-2012 |
| CN 114890758 | A | 12-08-2022 | NONE | | |

EPO FORM P0459

For more details about this annex : see Official Journal of the European Patent Office, No. 12/82

**EP 4 431 283 A1**

**Patent documents cited in the description**

- JP 2020105023 A